Europäisches Patentamt

European Patent Office

Office européen des brevets

(19)

(11) Numéro de publication : **0 184 961**
**B1**

(12) **FASCICULE DE BREVET EUROPÉEN**

(45) Date de publication du fascicule du brevet :
07.09.88

(51) Int. Cl.⁴ : **A 23 P 1/00**, A 23 L 3/40,
A 23 L 1/223, A 23 B 7/02

(21) Numéro de dépôt : 85402381.9

(22) Date de dépôt : 03.12.85

(54) Perfectionnements apportés à la préparation de poudres sèches à partir d'organismes vivants, stabilisés.

(30) Priorité : 04.12.84 FR 8418437

(43) Date de publication de la demande :
18.06.86 Bulletin 86/25

(45) Mention de la délivrance du brevet :
07.09.88 Bulletin 88/36

(84) Etats contractants désignés :
BE DE GB LU NL

(56) Documents cités :
FR-A- 734 741
FR-A- 2 049 670
FR-A- 2 150 885
FR-A- 2 285 181
FOOD TECHNOLOGY, vol. 21, février 1967, pages 83-85; G.D. SARAVACOS: "Freeze-drying using molecular sieve adsorbents"

(73) Titulaire : **Jean, Daniel**
**Rue de la Chaussade**
**F-63270 Vic le Comte (FR)**

**Reyroles, Jean-Pierre**
**Rue du Cerf-Volant**
**F-63500 Issoire (FR)**

(72) Inventeur : **Jean, Daniel**
**Rue de la Chaussade**
**F-63270 Vic le Comte (FR)**
Inventeur : **Reyroles, Jean-Pierre**
**Rue du Cerf-Volant**
**F-63500 Issoire (FR)**

(74) Mandataire : **Orès, Bernard et al**
**Cabinet ORES 6, Avenue de Messine**
**F-75008 Paris (FR)**

Jouve, 18, rue St-Denis, 75001 Paris, France

## 0 184 961

**Description**

La présente invention est relative à des perfectionnements apportés à la préparation de poudres sèches à partir d'organes vivants, stabilisés.

L'obtention de poudres sèches, aussi bien d'organes végétaux que d'organes animaux, a fait l'objet de nombreuses recherches comme en témoignent les publications parues à ce jour, et notamment les Brevets français 734 741, 2 150 885, 2 285 181 et 2 049 670. Les résultats obtenus sont plus ou moins satisfaisants, aussi bien du point de vue de conservation de la poudre obtenue que du point de vue de la qualité de la poudre elle-même.

Les procédés d'obtention les meilleurs, actuellement connus, sont ceux qui font appel à des techniques cryogéniques associées à une dessiccation sous vide poussé (cf. FOOD TECHNOLOGY, vol.21, février 1967, pp.83-85 : G.D. SARAVACOS). On s'est aperçu en effet, que l'obtention et la conservation de la poudre sèche de l'organe (végétal ou animal) traité dans un état aussi proche que possible du vivant, ne peuvent être obtenues que par un arrêt aussi brutal que possible des fonctions responsables des dégradations cellulaires. On obtient cet arrêt brutal soit par la chaleur, soit par la congélation ou la dessiccation. Ainsi, les méthodes actuellement décrites et disponibles sont les suivantes :

A. Séchage pur et simple au soleil ou à l'étuve, suivi de broyage : l'anabiose n'est pas réversible, les dégradations sont importantes ; bonne conservation.

B. Stabilisation de l'organe avant séchage par la chaleur élevée, la vapeur d'eau, la vapeur d'alcool ou les rayonnements ionisants, suivie de séchage et de broyage ; les résultats sont meilleurs que pour la méthode décrite en A, on évite notamment les dégradations enzymatiques. Par contre, on se prive pratiquement de toutes les molécules fragiles à la chaleur et/ou aux rayonnements ; les oxydations sont importantes et on crée une quantité non négligeable de radicaux libres. L'anabiose n'est pas réversible, la conservation est bonne.

C. Séchage de l'organe frais par lyophilisation ou cryodessiccation (avant ou après le broyage) : l'anabiose est souvent réversible, la conservation est bonne. L'inconvénient (important) de ce procédé réside en la perte des substances volatiles, et le procédé ne convient absolument pas, par exemple, pour les végétaux aromatiques.

D. Cryobroyage d'un organe frais puis conservation dans un solvant : le procédé est bon, mais l'anabiose n'est pas réversible, de plus la présence d'un solvant peut être dans certains cas, très gênante.

E. Cryobroyage d'un organe frais suivi d'une dessiccation par adsorption sur un support, notamment sur un silicagel: la méthode est bonne, mais le support fixe également des substances et principes actifs de l'organe. De plus, c'est un procédé peu économique car le recyclage du support est problématique.

La présente invention s'est par conséquent fixée pour but de pourvoir à un procédé d'obtention d'une poudre sèche d'organes entiers (végétaux et animaux) qui répond mieux aux nécessités de la pratique que les procédés et méthodes visant au même but antérieurement connus, notamment en ce qu'il permet l'obtention d'une poudre sèche à anabiose réversible, d'une conservation parfaite dans le temps, et en ce qu'il permet de préserver intégralement les composants de l'organe frais, y compris des substances volatiles à très volatiles.

La présente invention a pour objet un procédé d'obtention de poudres sèches d'organes végétaux et animaux, lequel procédé se caractérise en ce que, après le cryobroyage de l'organe :

a) la poudre congelée broyée est intimement mélangée avec un tamis moléculaire dont la taille des pores est de l'ordre de 3 Å environ,

b) la température du mélange poudre + tamis moléculaire est maintenue entre 2 et 6 °C par un flux d'azote liquide,

c) le mélange est maintenu sous le flux d'azote jusqu'à ce que la teneur en eau du gaz sortant chute brutalement à une valeur égale à environ 1/10 de la valeur de la saturation de l'air à 4 °C, soit une pression partielle d'environ 0,61 mm de mercure ($82 \cdot 10^{-5}$ bar).

d) la poudre sèche obtenue est séparée du tamis moléculaire par tamisage.

Les tamis moléculaires sont choisis de telle sorte que la taille de leurs pores (3 Å) ne retiennent que des molécules de petites tailles (hélium, hydrogène, azote, le gaz carbonique, l'oxygène, l'ammoniac, l'eau) à l'exclusion des molécules plus grosses telles, par exemple, que l'éthanol ou l'aldéhyde formique et a fortiori, les molécules telles que celles qui participent des mécanismes biochimiques, même les plus polaires, telles que les acides organiques et les protéines, ce qui n'était pas le cas de tous les adjuvants (comme par exemple le silicagel) utilisés dans l'Art antérieur.

2

Selon un mode de réalisation avantageux du procédé conforme à la présente invention, le tamis moléculaire est constitué par la zéolithe extrudée (répondant à la formule générale $Na_2O$, $Al2O_3$, $_nSiO_2$) de forme indifférente, mais de taille supérieure à 1 mm dans sa plus petite dimension.

Ce fait permet par la suite une séparation très aisée de la poudre sèche de l'organe du tamis moléculaire.

Selon un autre mode de réalisation avantageux du procédé objet de la présente invention, la quantité du tamis moléculaire utilisé est comprise entre 5 et 10 fois le poids de la poudre d'organe.

Conformément à l'invention, l'organe est tout d'abord prédécoupé dans un broyeur à + 4 °C, puis les morceaux d'organe sont introduits dans un dispositif d'acheminement cryogénique (vis sans fin, tapis, trémie ou toute autre structure destinée au convoyage et permettant l'aspersion des morceaux d'organe par un gaz liquéfié cryogénique inerte), à la sortie duquel les morceaux sont introduits dans un broyeur maintenu à une température de — 100° ± 20 °C par une injection de gaz liquide inerte cryogénique, puis une fois broyés (entre 50 et 200 µ) acheminés pneumatiquement dans un mélangeur contenant le tamis moléculaire et placé sur une balance de contrôle continu du poids.

La température du mélangeur est contrôlée et régulée à 4 °C ± 2 °C par un flux d'azote liquide, un mélange intime de la poudre sortant du broyeur se déssèche parfaitement au contact de la zéolithe tout en se décongelant lentement. La température doit être contrôlée car la dessiccation produit un dégagement de chaleur important qui compense largement l'apport de frigories de la poudre.

Selon un mode de réalisation avantageux de l'objet de l'invention, on peut, si on le désire, laver l'organe fraîchement prélevé — avant tout traitement — dans une solution d'antiseptique.

Egalement conformément à la présente invention, le tamis moléculaire séparé de la poudre sèche d'organe est recyclé après avoir été lavé à l'eau déminéralisée, puis séché à 200 °C ± 20 °C dans un courant d'azote anhydre.

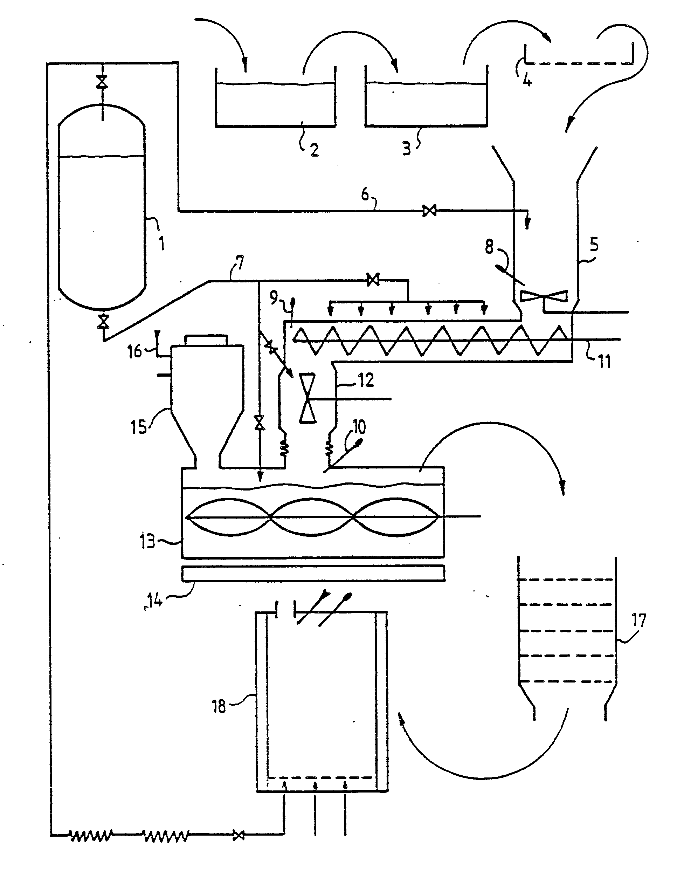

Outre les dispositions qui précèdent, l'invention comprend encore d'autres dispositions qui ressortiront de la description qui va suivre, qui se réfère à des exemples de mise en œuvre du procédé conforme à la présente invention, ainsi qu'à un exemple d'un schéma d'une installation industrielle représentée sur le dessin annexé.

Il doit être bien entendu toutefois que ces exemples de mise en œuvre ainsi que l'exemple de l'installation industrielle sont donnés uniquement à titre d'illustration de l'objet de l'invention dont ils ne constituent en aucune manière une limitation.

### Exemple d'une installation industrielle (Figure unique)

Une installation industrielle de traitement des organes peut comporter, par exemple :

— une cuve 1 de stockage de l'azote liquide. C'est à partir de ce réservoir que les conduites 6 et 7 amènent l'azote liquide lors de l'opération de prédécoupage (prébroyeur 5) ou pendant le broyage (broyeur 12).

— un dispositif (facultatif) de décontamination et de débactérisation. Ce dispositif se compose du bac 2 contenant par exemple une solution de $KMnO_4$ 0,05 M, du bac 3 contenant l'eau déminéralisée de rinçage et d'un égouttoir 4 où l'organe végétal ou animal fraîchement prélevé et décontaminé est égoutté sous flux laminaire, par exemple.

Il est évident que si l'organe est prélevé stérilement ou si l'analyse microbiologique de l'échantillon est jugée satisfaisante, on peut se passer du traitement à l'aide d'une solution d'antiseptique.

— un prébroyeur 5 à couteaux verticaux ou horizontaux où l'organe subit un prédécoupage à une température contrôlée à l'aide de la sonde 8 (environ 4 °C).

Cette opération de découpage peut se faire en continu.

— un dispositif d'acheminement cryogénique 11. Les morceaux d'organe sortant du prébroyeur 5 (leur dimension moyenne est comprise entre 1 et 3 cm), sont introduits dans ce dispositif d'acheminement cryogénique (par exemple une vis sans fin), qui est maintenu à une température de — 100 °C ± 20 °C à l'aide d'azote liquide amené par la conduite 7 à partir du réservoir 1. La température est réglée à l'aide d'une sonde 9.

— un broyeur 12 dans lequel on introduit les morceaux d'organes découpés précédemment. Ce broyeur est choisi en fonction du type de granulométrie que l'on veut obtenir (en général, entre 50 et 200 µ).

— un mélangeur 13 dans lequel est acheminée pneumatiquement la poudre sortant du broyeur 12, à — 100 °C ± 20 °C. La poudre y est mélangée avec une vitesse assez lente avec le tamis moléculaire (par exemple la zéolithe $Na_2O$, $Al_2O_3$, $nSiO_2$) qui s'y trouve déjà. La taille des particules de la zéolithe est au moins égale à 1 mm dans sa plus petite dimension et la taille des pores est égale à 3 Å ($3 \cdot 10^{-4}$ µ).

Le mélangeur 13 repose sur la balance 14 qui permet de mesurer le poids de la poudre introduite, le chargement en poudre est arrêté quand il correspond à un poids compris entre 1/5 à 1/10 du tamis moléculaire. La température du mélangeur est contrôlée à l'aide de la sonde 10. Le contrôle de la température est très important (elle est maintenue entre 2 et 6 °C) car les dessiccations de la poudre au contact de la zéolithe produit un dégagement de chaleur important. On maintient ce mélange sous flux d'azote jusqu'à ce que la teneur en eau du gaz sortant chute à environ 0,61 mm de Hg (1/10 de la valeur de la saturation de l'air à + 4 °C). Cette valeur est mesurée à l'aide d'une sonde diélectrique 16 placée à la partie supérieure du cyclône 15.

— Tamis 17 où la poudre sèche obtenue est séparée de la zéolithe par tamisage ; le tamis moléculaire est régénéré dans le régénérateur 18.

Exemples de préparation

1. Préparation d'une poudre de feuilles de menthe poivrée

200 kg de feuilles de menthe poivrée de culture sont récoltées avant le lever du jour en juillet et acheminées rapidement au laboratoire.

Les feuilles sont imprégnées en plusieurs fois pendant 10 minutes dans un bac 2 de 500 litres de capacité contenant 250 litres d'une solution aqueuse de permanganate de potassium 0,05 M. Elles sont ensuite placées dans un autre bac 3 de 500 litres de capacité où elles sont rincées à l'eau désionisée, filtrée stérilement sur membrane 2 µ.

Elles sont ensuite égouttées à l'abri de la poussière sur l'égouttoir 4.

On opère alors la première coupe en morceaux d'environ 2 cm dans un prébroyeur 5 placé au-dessus de la vis d'archimède 11.

La congélation et le broyage (broyeur 12) s'opèrent à — 100 °C et le débit est de 80 kg/heure environ. La congélation suivie du broyage demande environ deux heures et demie.

Le mélange s'opère simultanément au broyage dans le mélangeur 13 et la dessiccation complète se termine deux heures après la fin de ce dernier.

La quantité de zéolithe utilisée ici est de 1 500 kg.

On transvase alors le mélange poudre-zéolithe dans le tamis 17. La poudre de feuilles qui ne passe pas au module 32 représente 0,4 % du total, soit 100 grammes. Elle sera recyclée dans le broyage suivant.

On récupère alors 28 kg de poudre contenant 2,7 % d'eau résiduelle (évaluée par dessiccation à poids contant à 120 °C).

2. Préparation d'une poudre de racines de valériane

On opère de la même façon que précédemment, à la différence près suivante : la racine est lavée très soigneusement dans une turbine sur les lieux de la récolte pour éliminer toute trace de terre.

A partir de 200 kg de racines, on obtient 52 kg de poudre contenant 2,4 % d'eau résiduelle, avec une utilisation de 1 200 kg de zéolithe.

3. Préparation d'une poudre de feuilles d'olivier

200 kg de feuilles d'olivier sont traitées comme la menthe poivrée, par 1 000 kg de zéolithe. On obtient 56 kg de poudre contenant 3,1 % d'eau résiduelle.

Contrôle des produits obtenus

— La poudre obtenue contient 2 à 3 % d'eau résiduelle (eau liée) qui ne perturbe pas la conservation du produit, toute l'eau disponible ayant été évacuée par la zéolithe,

— la poudre, quand il s'agit d'un végétal aromatique, garde toutes ses qualités organoleptiques dès qu'on la réhydrate,

— on ne constate aucune différence de composition chimique entre l'organe frais et l'organe ainsi pulvérisé et desséché,

— l'anabiose est réversible. Une réhydratation fait repartir la vie cellulaire, la respiration et la photosynthèse dans le cas d'organes chlorophylliens peuvent être mises en évidence par les méthodes classiques.

Pour les mesures simultanées de la respiration et de la photosynthèse, on opère de la façon suivante :

— une cellule en pyrex est immergée dans un bain thermostaté transparent à 30 °C. Elle est équipée d'une arrivée d'azote, d'un évent avec robinet à pointeau, d'un accès bouchant émeri pour l'introduction des poudres et d'une sonde servant à la mesure de l'oxygène dissous ;

— dans la cellule, on place 250 ml d'une solution de $NaHCO_3$ 0,04 M tamponnée à pH 6,8 par un tampon citrate-phosphate ;

— on place la poudre dans la cellule correspondant à 25 g de plante fraîche ;

— on fait barbotter de l'azote dans la solution en ouvrant le robinet à pointeau jusqu'à ce que la valeur d'O2 dissous soit proche de 0 ppm ;

— on éclaire alors le dispositif par une rampe néon et on enregistre l'augmentation de la teneur de la solution en $O_2$ dissous en fonction du temps. Quand on atteint environ 2 ppm, on arrête l'illumination et on note la baisse d'$O_2$ dissous dans la solution ; d'autre part, on mesure la baisse de la teneur en $O_2$ en l'absence de poudre et dans les mêmes conditions.

Calculs :

soit

Ph : l'activité photosynthétique
R : l'activité respiratoire
V1 : la vitesse moyenne de dégagement d'$O_2$ global pendant l'illumination
V2 : la vitesse moyenne de consommation d'$O_2$ à l'obscurité
V3 : la vitesse moyenne de baisse de $O_2$ sans la poudre
V1, V2 et V3 sont exprimés en ppm par minute
On a :
R = V2-V3 exprimé en ppm par minute
Ph = V1 + V2 — V3 exprimé en ppm par minute

Résultats obtenus

Menthe :
R = 0,150 ; teneur résiduelle en huile essentielle 92 %
Ph = 0,156
Olivier :
R = 0,080 ; teneur résiduelle en oleuropéoside : 100 %
Ph = 0,124
Valériane :
R = 0,470 ; teneur résiduelle en valépotriate : 98 %

Tableau de comparaison entre le tamis moléculaire et les adsorbants de l'Art antérieur

|  | Capacité de fixation de l'eau | Fixation d'autres substances que l'eau |
| --- | --- | --- |
| Tamis moléculaire 3 A ($3.10^{-4}\mu$) | env. 20 % | 0 % |
| Adsorbant classique : silicate | env. 27 % | env. 10 % |
| Adsorbant classique : alumine | env. 10 % | env. 14 % |

Etude de vieillissement

Conditions de la conservation :
— obscurité
— 18 °C
— à l'abri de l'air
— temps de conservation : 6 Mois

|  | Menthe | Valériane | Olivier |
| --- | --- | --- | --- |
| Perte en pouvoir photosynthétique | 1 % | — | 3 % |
| Perte en pouvoir respiratoire | 1 % | 0 | 2 % |
| Perte en principes actifs | huile essent. $\simeq$ 0 % | valépotriates 2 % | oleuropeine 0,5 % |

Il résulte de la description qui précède que le procédé conforme à la présente invention permet d'obtenir des poudres sèches d'organe qui ont gardé toutes les caractéristiques de l'organisme vivant et d'une conservation parfaite.

## Revendications

1. Procédé d'obtention de poudres sèches d'organes végétaux et animaux, lequel procédé se caractérise en ce que, après le cryobroyage de l'organe,
a) la poudre congelée broyée est intimement mélangée avec un tamis moléculaire dont la taille des pores est de l'ordre de 3 Å ($3 \cdot 10^{-4}$ μ) environ,

5

b) la température du mélange poudre + tamis moléculaire est maintenue entre 2 et 6 °C par un flux d'azote liquide,

c) le mélange est maintenu sous le flux d'azote jusqu'à ce que la teneur en eau du gaz sortant chute brutalement à une valeur égale à environ 1/10 de la valeur de la saturation de l'air à 4 °C, soit une pression partielle d'environ 0,61 mm de mercure, soit $82 \cdot 10^{-5}$ bar.

d) la poudre sèche obtenue est séparée du tamis moléculaire par tamisage.

2. Procédé selon la revendication 1, caractérisé en ce que le tamis moléculaire est constitué par la zéolithe extrudée (répondant à la formule générale $Na_2O$, $Al_2O_3$, $_nSiO_2$) de forme indifférente, mais de taille supérieure à 1 mm dans sa plus petite dimension.

3. Procédé selon la revendication 1, caractérisé en ce que la quantité du tamis moléculaire utilisé est comprise entre 5 et 10 fois le poids de la poudre d'organe.

4. Procédé selon l'une quelconque des revendications 1 à 3, caractérisé en ce que l'organe est tout d'abord prédécoupé dans un broyeur à + 4 °C, puis les morceaux d'organe sont introduits dans un dispositif d'acheminement cryogénique (vis sans fin, tapis, trémie ou toute autre structure destinée au convoyage et permettant l'aspersion des morceaux d'organe par un gaz liquéfié cryogénique inerte), à la sortie duquel les morceaux sont introduits dans un broyeur maintenu à une température de $-100° \pm 20$ °C par une injection de gaz liquide inerte cryogénique, puis une fois broyés (entre 50 et 200 $\mu$) acheminés pneumatiquement dans un mélangeur contenant le tamis moléculaire et placé sur une balance de contrôle continu du poids.

5. Procédé selon l'une quelconque des revendications 1 à 4, caractérisé en ce qu'on peut, si on le désire, laver l'organe fraîchement prélevé — avant tout traitement — dans une solution d'antiseptique.

6. Procédé selon l'une quelconque des revendications 1 à 5, caractérisé en ce que le tamis moléculaire séparé de la poudre sèche d'organe est recyclé après avoir été lavé à l'eau déminéralisée, puis séché à 300 °C ± 20 °C dans un courant d'azote anhydre.

7. Installation pour la mise en œuvre du procédé selon les revendications 1 à 6, caractérisée en ce qu'elle est constituée :

— d'un prébroyeur (5) à couteaux où l'organe subit un prédécoupage à une température contrôlée,

— d'un dispositif d'acheminement cryogénique (11),

— d'un broyeur (12) dans lequel on introduit, par ledit dispositif d'acheminement cryogénique (11), les morceaux d'organe découpés dans le prébroyeur (5),

— d'un mélangeur (13) dans lequel est acheminée pneumatiquement la poudre sortant du broyeur (12) pour y être mélangée avec le tamis moléculaire,

— d'une balance (14) qui permet de mesurer le poids de la poudre introduite,

— d'un tamis (17) de séparation de la poudre sèche et du tamis moléculaire, et éventuellement :

— d'un dispositif de décontamination (2, 3, 4) placé en tête de la chaîne,

— d'un régénérateur (18) pour la régénération et la récupération du tamis moléculaire.

8. Poudres sèches d'organes végétaux ou animaux présentant une anabiose réversible et contenant intégralement les composants des organes frais, comme elles peuvent être obtenues par le procédé selon les revendications 1 à 6.

9. Application des poudres selon la revendication 8 en diététique et en pharmacie.

**Claims**

1. A process for the preparation of dry powders from vegetable and animal organs, which process is characterized in that, after cryogrinding the organ,

a) the ground frozen powder is intimately mixed with a molecular sieve whose pore size is in the order of about 3 Å ($3 \times 10^{-4}$ $\mu$),

b) the temperature of the powder + molecular sieve mixture is maintained between 2 and 6 °C by a flow of liquid nitrogen,

c) the mixture is kept under the nitrogen flow till the water content of the outcoming gas drastically falls to a level of about 1/10 of the saturation level of air at 4 °C, or a partial pressure of about 0.61 mm Hg, or $82 \times 10^{-5}$ bar.

d) the obtained dry powder is separated from the molecular sieve by filtering.

2. A process according to claim 1, characterized in that the molecular sieve is made up by the extruded zeolite (corresponding to the general formula $Na_2O$, $Al_2O_3$, $_nSiO_2$), with an indifferent shape, but a size greater than 1 mm in its smallest dimension.

3. A process according to claim 1, characterized in that the amount of molecular sieve used is between 5 and 10 times the weight of the organ powder.

4. A process according to any of claims 1-3, characterized in that the organ is first precut in a mill at + 4 °C, in that the organ pieces are then introduced in a cryogenic conveyor device (worm, belt, hopper or any other structure for conveying and allowing the sprinkling of the organ pieces by an inert cryogenic liquefied gas), at whose outlet the pieces are introduced into a mill, maintained at a temperature of $-100° \pm 20$ °C by injecting cryogenic inert liquid gas, and then, once ground (to 50-200 $\mu$), are conveyed

by a pneumatic means into a mixer containing the molecular sieve and put on scales for continuously monitoring the weight.

5. A process according to any of claims 1-4, characterized in that the freshly removed organ can, if need be — before any treatment — be washed in an antiseptic solution.

6. A process according to any of claims 1-5, characterized in that the molecular sieve separated from the dry organ powder is recycled after being washed with demineralized water, and then dried at 300 °C ± 20 °C in a flow of anhydrous nitrogen.

7. An installation for implementing the process according to claims 1-6, characterized in that it is made up of :

— a pregrinding mill (5), provided with knives, wherein the organ is precut at a controlled temperature,

— a cryogenic conveying device (11),

— a mill (12) wherein, by said cryogenic conveying device (11), the organ pieces cut in the pregrinding mill (5) are introduced,

— a mixer (13) into which the powder from mill (12) is pneumatically conveyed therein to be mixed with the molecular sieve,

— a pair of scales (14) for measuring the weight of the introduced powder,

— a sieve (17) for separating the dry powder from the molecular sieve.

and in some cases :

— a decontamination device (2, 3, 4) placed at head of chain,

— a regenerator (18) for regenerating and recuperating the molecular sieve.

8. Vegetable or animal organ dry powders with reversible anabiosis, and containing all fresh organ components, as may be obtained by the process according to claims 1-6.

9. Application of powders according to claim 8 in the dietetical and pharmaceutical fields.

**Patentansprüche**

1. Verfahren zur Herstellung von trockenen Pulvern aus pflänzlichen und tierischen Organen, dadurch gekennzeichnet, daß nach Kryozerkleinerung des Organs,

a) das zerkleinerte gefrorene Pulver ist gründlich mit einem Molekularsieb dessen Porengröße in der Größenordnung von ungefähr 3 Å ($3 \times 10^{-4}$ μ) liegt, gemischt,

b) die Temperatur der Pulver + Molekularsieb Mischung ist zwischen 2 und 6 °C durch einen flüssigen Stickstoffstrom gehalten,

c) die Mischung ist so lange unter dem Stickstoffstrom gehalten, bis das Wassergehalt des herausfließen Gas drastisch hinunterfällt, bis zum Niveau des (ungefähr) 1/10 des Sättigungsniveau der Luft bei 4 °C, oder einem Teildruck von ungefähr 0,61 mm Hg, oder $82 \times 10^{-5}$ bar.

d) das erhaltene gefrorene Pulver ist vom Molekularsieb durch Filtration getrennt.

2. Verfahren nach Anspruch 1, dadurch gekennzeichnet, daß das Molekularsieb ist aus dem extrudierten Zeolith zusammengesetzt, (entsprechend der allgemeinen Formel $Na_2O$, $Al_2O_3$, $_nSiO_2$), mit gleichgültiger Form, aber einer Größe über 1 mm in ihrer kleinsten Dimension.

3. Verfahren nach Anspruch 1, dadurch gekennzeichnet, daß die Menge des verwendeten Molekularsieb zwischen 5 und 10 mal das Gewicht des Organpulver liegt.

4. Verfahren nach irgendwelchem Anspruch 1-3, dadurch gekennzeichnet, daß das Organ zuerst in einer Mühle bei + 4 °C vorgeschnitten ist, daß dann die Organstücke in einem kyrogenischen Fördergerät (Schnecke, Riemen, Fülltrichter oder irgendwelche andere Struktur zur Förderung und Einsprengung der Organstücke mit einem inerten kryogenischen verflüssigten Gas) eingeführt sind, bei dessen Mündung die Stücke in eine Mühle eingeführt sind, bei einer Temperatur von — 100° ± 20 °C durch Einspritzung von einem kryogenischen inerten flüssigen Gas, und dann, nach Zerkleinerung (bis hinunter zu 50-200 μ), sind mit einem pneumatischen Mittel ins Mischgerät, das Molekularsieb gehaltend, gefördert, dann auf einer Waage zur kontinuierlichen Kontrolle des Gewichts gesetzt.

5. Verfahren nach irgendwelchem Anspruch 1-4, dadurch gekennzeichnet, daß das frisch entfernte Organ kann, wenn nötig — vor aller Behandlung — in einer antiseptischen Lösung gewäscht werden.

6. Verfahren nach irgendwelchem Anspruch 1-5, dadurch gekennzeichnet, daß das vom trockenem Organpulver getrennte Molekularsieb, nachdem es mit entmineralisiertem Wasser gewäscht wurde, zurückgeführt ist, dann bei 300 °C ± 20 °C in einem wasserfreien Stickstoffstrom getrocknet ist.

7. Anlage zur Durchführung des Prozess nach Ansprüche 1-6, dadurch gekennzeichnet, daß sie aus :

— einer vorzerkleinernder Mühle (5), mit Messer ausgerüstet, worin das Organ bei einer kontrolliert Temperatur vorgeschnitten ist,

— einer kryogenischen Förderungsvorrichtung (11),

— einer Mühle (12) worin, mit dieser kryogenischen Förderungsvorrichtung (11), die in der vorzerkleinernder Mühle (5) geschneidete Organstücke eingeführt werden,

— einem Mischer (13) worin das Pulver aus Mühle (12) pneumatisch geführt ist, um dort mit dem Molekularsieb gemischt zu werden,

— einer Waage (14) zum Messen des Gewicht des eingeführten Pulvers,

— einem Sieb (17) zur Trennung des trockenen Pulvers aus dem Molekularsieb, und gegebenenfalls :

— einer Dekontaminationsvorrichtung (2, 3, 4) bei dem Kettenkopf gesetzt,

— einem Regenerator (18) zum regenerieren und rückgewinnen des Molekularsiebs, zusammengesetzt ist.

8. Pflänzliche oder Tierische trockene Organpulver mit reversibler Anabiose, die die ganze Menge der frischen Organkomponente, wie sie mit dem Prozess nach Ansprüchen 1-6 erhaltbar sind, enthält.

9. Anwendung der Pulver nach Anspruch 8 im diätetischen und pharmazeutischen Gebiet.